# EUROPEAN PATENT APPLICATION

(11) **EP 4 546 616 A1**
(43) Date of publication of application: **30.04.2025**
(21) Application number: 23910390.6
(22) Date of filing: 22.12.2023
(51) Int. Cl.: H02K 3/50

(54) **ELECTRIC TOOL AND ELECTRIC MOTOR**

(30) Priority: 30.12.2022 CN 202211725108
(71) Applicant: Nanjing Chervon Industry Co., Ltd., Nanjing, Jiangsu 211106 (CN)
(72) Inventor: MENG, Chao, Nanjing, Jiangsu 211106 (CN); TANG, Zichun, Nanjing, Jiangsu 211106 (CN)
(74) Representative: Sun, Yiming
(86) International application number: PCT/CN2023/140985
(87) International publication number: WO 2024/140464

(57) **Abstract**

Provided are a power tool and an electric motor. The power tool includes a working assembly and an electric motor. The electric motor is used for driving the working assembly to work. The electric motor includes a rotor assembly, a stator assembly, and an end cover assembly. The end cover assembly is used for fixing windings and leading out multiple motor lead wires. The end cover assembly includes coil end covers and a fixing member. The coil end cover is at least partially embedded into the stator assembly. The fixing member mates with the coil end cover to fix the motor lead wires. The end cover assembly is capable of changing the lead-out direction of the motor lead wires at least twice. The electric motor has a more compact structure and can be adapted to power tools of different dimensions.

## Description

This application claims priority to Chinese Patent Application No. 202211725108.8 filed with the China National Intellectual Property Administration (CNIPA) on Dec. 30, 2022, the disclosure of which is incorporated herein by reference in its entirety.

### TECHNICAL FIELD

The present application relates to the field of tools and, in particular, to a power tool and an electric motor.

### BACKGROUND

As a type of power source, the electric motors in the related art are widely used in various power tools. Generally speaking, the electric motor drives a transmission assembly or an output assembly by outputting torque. For some power tools each with a compact structure and a relatively small space inside the housing, on the one hand, the electric motor needs to output relatively strong power; and on the other hand, the dimension of the electric motor needs to be limited to a preset range. Therefore, the structure of the electric motor needs to be relatively compact.

This part provides background information related to the present application, which is not necessarily the related art.

### SUMMARY

An object of the present application is to solve or at least alleviate part or all of the preceding problems. For this reason, the object of the present application is to provide a power tool with a compact structure and an electric motor.

To achieve the preceding object, the present application adopts the technical solutions below. A power tool includes a working assembly and an electric motor. The electric motor is used for driving the working assembly to work. The electric motor includes a rotor assembly, a stator assembly, and an end cover assembly. The rotor assembly includes a rotor shaft connected to the working assembly. The stator assembly includes a stator core and multiple winding coils wound onto the stator core. The end cover assembly is used for fixing the winding coils and leading out multiple motor lead wires. The end cover assembly includes coil end covers and a fixing member. The coil end cover is at least partially embedded into the stator assembly. The fixing member mates with the coil end cover to fix the motor lead wires. The end cover assembly is capable of changing the lead-out direction of the motor lead wires at least twice.

In some examples, the coil end cover includes a lead-out portion for leading out the motor lead wires. The lead-out portion includes a first end facing the winding coils and a second end facing away from the winding coils. The lead-out portion further includes first openings and second openings. The first openings are provided at the first end, where the motor lead wires enter the lead-out portion through the first openings. The second openings are provided at the second end, where the motor lead wires leave the lead-out portion through the second openings.

In some examples, with an extension direction of the rotor shaft as a vertical direction, the first openings and the second openings are located on different horizontal planes.

In some examples, a direction in which the motor lead wires enter the first openings is a first lead-out direction, and a direction in which the motor lead wires leave the second openings is a second lead-out direction. The first lead-out direction is basically parallel to the second lead-out direction.

In some examples, a direction in which the motor lead wires enter the first openings is a first lead-out direction, and a direction in which the motor lead wires leave the second openings is a second lead-out direction. An included angle is formed between the first lead-out direction and the second lead-out direction.

In some examples, a direction in which the motor lead wires leave the first openings is a third lead-out direction. The third lead-out direction is perpendicular to the first lead-out direction or the second lead-out direction.

In some examples, the fixing member further includes a first clamping portion and a second clamping portion that are snap-fit with the coil end cover.

In some examples, the first clamping portion extends in a direction away from the second clamping portion, and the second clamping portion extends in a direction away from the first clamping portion.

In some examples, the first clamping portion extends in a direction toward the second clamping portion, and the second clamping portion extends in a direction toward the first clamping portion.

In some examples, the motor lead wires are bonded to the coil end cover.

In some examples, the fixing member further includes insertion portions for being inserted into the first openings and the second openings.

In some examples, the lead-out portion further includes first protrusions, and the first opening and the second opening are formed between two first protrusions.

The insertion portion includes second protrusions, and the second protrusions are configured to be capable of abutting against the first protrusions so that the insertion portions abut against the motor lead wires.

In some examples, with an extension direction of the rotor shaft as a vertical direction, the insertion portion includes at least two second protrusions located on different horizontal planes so that the insertion portion is capable of abutting against the motor lead wires with different diameters.

In some examples, the stator core is configured to be capable of abutting against the coil end covers when the electric motor rotates.

The present application provides an electric motor. The electric motor includes a rotor assembly, a stator assembly, and an end cover assembly. The rotor assembly includes a rotor shaft. The stator assembly includes a stator core and multiple winding coils wound onto the stator core. The end cover assembly is used for fixing the winding coils and leading out multiple motor lead wires. The end cover assembly includes coil end covers and a fixing member. The coil end cover is at least partially embedded into the stator assembly. The fixing member mates with the coil end cover to fix the motor lead wires. The end cover assembly is capable of changing the lead-out direction of the motor lead wires at least twice.

The benefits of the present application are described below. In the provided electric motor, the coil end cover mates with the fixing member so that the end cover assembly can change the lead-out direction of the motor lead wires at least twice, thereby reducing the radial dimensions of the motor lead wires of the electric motor at the lead-out position. In this manner, the electric motor has a more compact structure and can be adapted to power tools of different dimensions.

### BRIEF DESCRIPTION OF DRAWINGS

FIG. 1 is a perspective view of a power tool with part of a housing removed according to an example of the present application.
FIG. 2 is an exploded view of an electric motor according to an example of the present application.
FIG. 3 is a perspective view of some structures of an electric motor according to an example of the present application.
FIG. 4 is a sectional view of some structures of the electric motor shown in FIG. 3.
FIG. 5 is a perspective view of a coil end cover and a fixing member according to an example of the present application.
FIG. 6 is a plan view of the coil end cover and the fixing member shown in FIG. 5.
FIG. 7 is a perspective view of some structures of an electric motor according to an example of the present application.
FIG. 8 is a perspective view of some structures of an electric motor according to an example of the present application.
FIG. 9 is a perspective view of some structures of an electric motor according to an example of the present application.
FIG. 10 is a perspective view of some structures of an electric motor according to an example of the present application.
FIG. 11 is a perspective view of some structures of an electric motor according to an example of the present application.
FIG. 12 is a perspective view of some structures of an electric motor according to an example of the present application.
FIG. 13 is a perspective view of some structures of an electric motor according to an example of the present application.
FIG. 14 is a perspective view of a fixing member in FIG. 13.
FIG. 15 is a perspective view of some structures of an electric motor according to an example of the present application.
FIG. 16 is a partial enlarged view of a region A in FIG. 15.
FIG. 17 is a perspective view of some structures of an electric motor according to an example of the present application.
FIG. 18 is an exploded view of some structures of the electric motor in FIG. 17.
FIG. 19 (a) is a perspective view of a wire hooking rack in FIG. 18 from one perspective.
FIG. 19 (b) is a perspective view of a wire hooking rack in FIG. 18 from another perspective.
FIG. 20 is a perspective view of some structures of an electric motor according to an example of the present application.
FIG. 21 is a perspective view of a terminal in FIG. 20.
FIG. 22 is a perspective view of some structures of the electric motor in FIG. 20 from another perspective.
FIG. 23 is a perspective view of some structures of an electric motor according to an example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

An electric motor is rotatable only when driven by a power supply. However, in some power tools each with a compact structure and a relatively small space inside the housing, the motor lead wires of the electric motor have relatively large radial dimensions at the lead-out position. The present application provides a power tool and an electric motor so that the radial dimension of the electric motor can be reduced, and the electric motor is more compact and can be adapted to power tools of different dimensions.

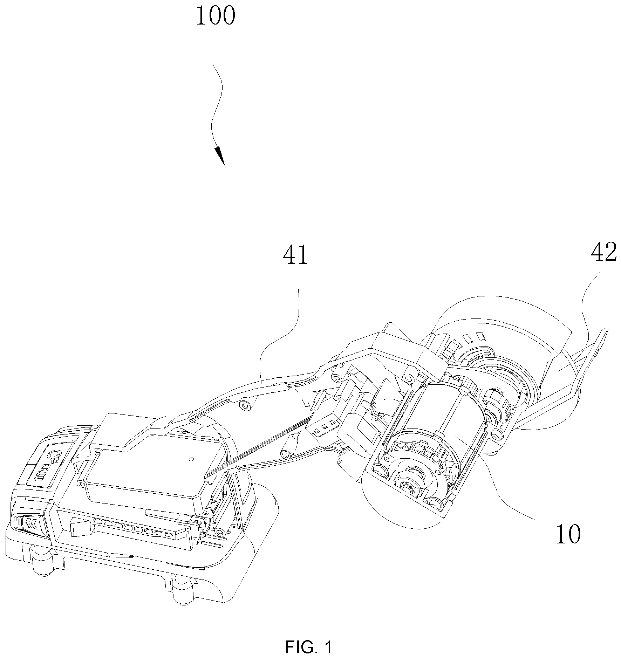

As shown in FIG. 1, the present application provides a power tool 100. The power tool 100 includes an outer housing 41, a working assembly 42, and an electric motor 10. The working assembly 42 and a rotor shaft of the electric motor 10 are directly connected or indirectly connected via a transmission device such as a gearbox. The electric motor 10 drives the working assembly 42 to work. Specifically, the working assembly 42 includes a housing and a working head mounted onto the housing, and the rotor shaft drives the working head to work.

In the examples of the present application, the electric motor 10 may be used in different types of power tools to provide driving forces for the power tools. For example, other types of power tools such as a handheld power tool, a garden power tool, and a table power tool that can use the electric motor 10 provided in the examples of the present application are all within the scope of the present application. The electric motor is also referred to as a motor, and the electric motor 10 may be a brushed motor or a brushless motor. Different types of electric motors and power tools have different tool bodies and functional assemblies, which are not listed here one by one.

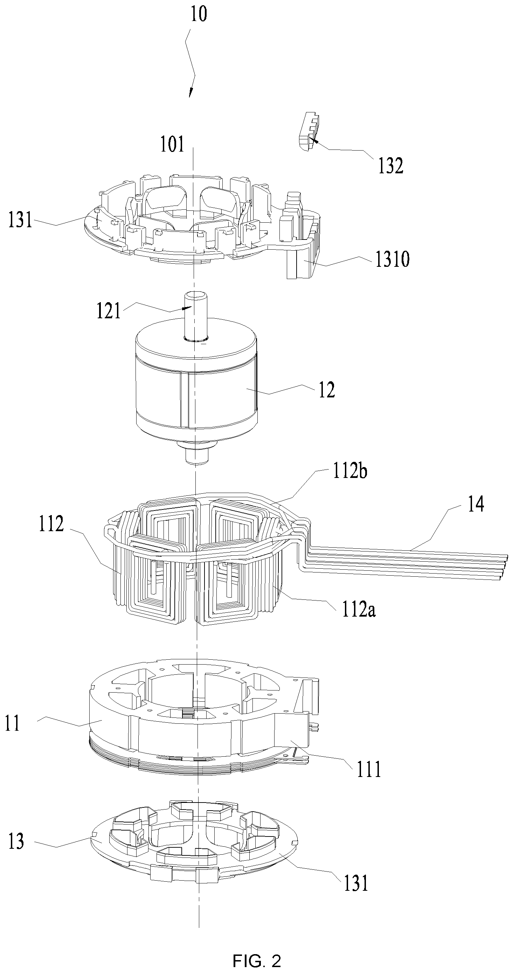

As shown in FIG. 2, the electric motor 10 mainly includes a stator assembly 11, a rotor assembly 12, and an end cover assembly 13.

The stator assembly 11 includes a stator core 111 and winding coils 112, and the winding coils 112 are wound onto the stator core 111. The stator core 111 is usually made of metal such as steel or iron, and the stator core 111 is also referred to as a stator iron core. The stator core 111 includes multiple individual stator laminations that are stacked together to form the stator core 111. The winding coils 112 are configured to be coils wound onto the stator core 111, and the winding coils 112 are also referred to as windings. The winding coils 112 include a body portion 112a, a surrounding portion 112b, and lead wires 14. The stator core 111 is provided with connecting arms for winding the winding coils 112, and a gap is provided between adjacent connecting arms. The winding coils 112 are wound onto the connecting arms, and at least part of the body portion 112a is located in the gap. The surrounding portion 112b is connected to the body portion 112a, and the surrounding portion 112b surrounds a first direction 101 and is circumferentially disposed on the end cover assembly 13. The lead wires 14 are connected to the surrounding portion 112b and extend in a direction away from the first direction 101.

The rotor assembly 12 includes a rotor shaft 121 extending along the first direction 101. The stator assembly 11 extends axially and is sleeved on the rotor shaft 121. The rotor assembly 12 is disposed in the stator assembly 11. In some optional examples, the rotor assembly 12 may be disposed on the outer side of the stator assembly 11. In some examples, a fan is further provided on the rotor shaft 121 and is used for dissipating heat for the electric motor 10.

The end cover assembly 13 is mounted on the end of the stator core 111. The end cover assembly 13 includes coil end covers 131. The coil end cover 131 is at least partially embedded into the gap between adjacent connecting arms of the stator assembly 11 to achieve fixation. The coil end cover 131 is disposed above an end of the winding coils 112 and can fix the wire ends of multiple motor lead wires 14 left after the winding coils 112 are wound, thereby preventing the winding coils 112 in the stator core 111 from being disordered. In an example, the end cover assembly 13 includes two coil end covers 131 mounted on two ends of the stator core 111, respectively. The motor lead wires 14 can be used as wires for connecting the electric motor 10 to an external power supply. When the winding coils 112 are connected to the power supply, the rotor 12 of the electric motor 10 starts to rotate. The motor lead wires 14 are mounted onto the electric motor 10 through the coil end cover 131, and the position of the motor lead wires 14 is generally fixed. For example, the motor lead wires 14 are generally partially uniformly disposed around the coil end cover 131 in the circumferential direction.

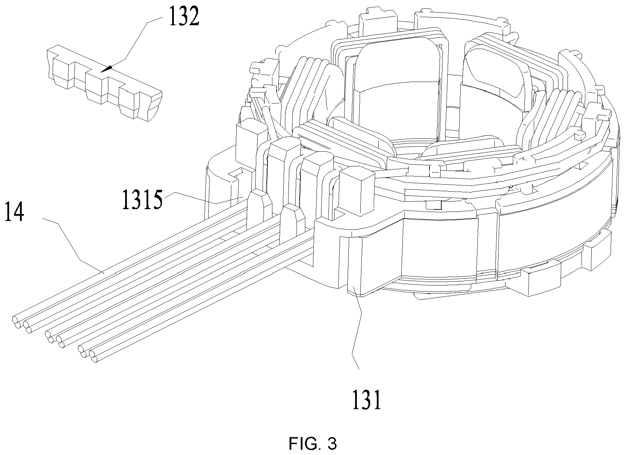

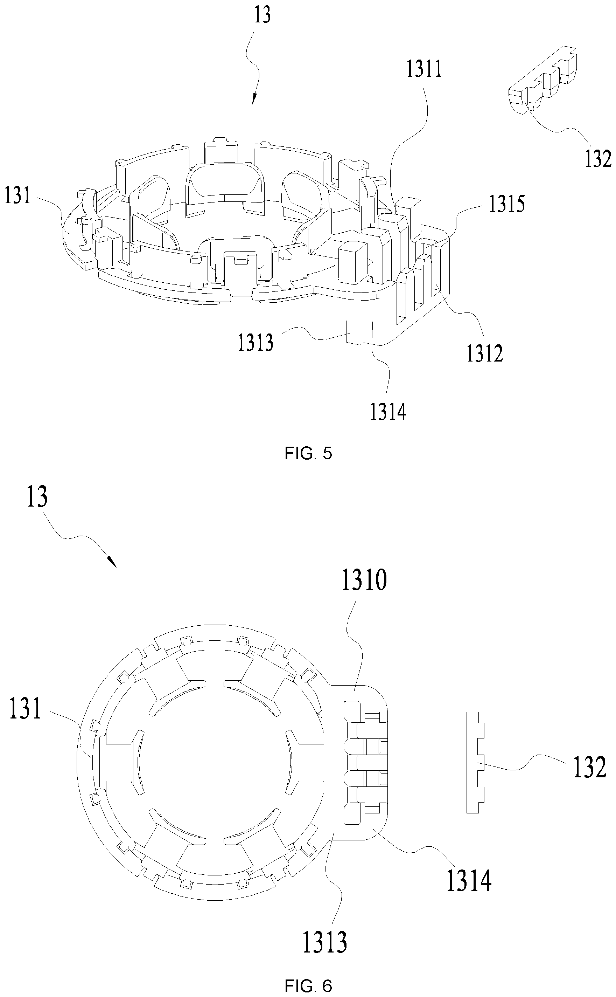

As shown in FIGS. 2 to 6, in some examples, the end cover assembly 13 further includes a fixing member 132 configured to mate with the coil end cover 131 to fix the motor lead wires 14. The coil end cover 131 mates with the fixing member 132 so that the lead-out direction of the motor lead wires 14 can be changed at least twice, and the retraction of the motor lead wires 14 after winding is completed can be avoided, thereby reducing the radial dimensions of the motor lead wires 14 of the electric motor 10 at the lead-out position.

In some examples, the coil end cover 131 includes a lead-out portion 1310 for leading out the motor lead wires 14. The motor lead wires 14 leave the winding coils 112 at the lead-out portion 1310 and are electrically connected to the power supply.

The lead-out portion 1310 includes a first opening 1311, a second opening 1312, a first end 1313, and a second end 1314. The first opening 1311 are disposed at the first end 1313, and the second opening 1312 are disposed at the second end 1314. The first end 1313 is closer to the winding coils 112, and the second end 1314 is farther from the winding coils 112. The motor lead wires 14 enter the lead-out portion 1310 through the first openings 1311, and the motor lead wires 14 leave the lead-out portion 1310 through the second openings 1312.

In some examples, the lead-out portion 1310 includes multiple first openings 1311 and multiple second openings 1312. The number of the first openings 1311 is equal to the number of the second openings 1312. The lead-out portion 1310 is formed with a lead wire channel 1315 disposed between the first openings 1311 and the corresponding second openings 1312 and used for accommodating the motor lead wires 14.

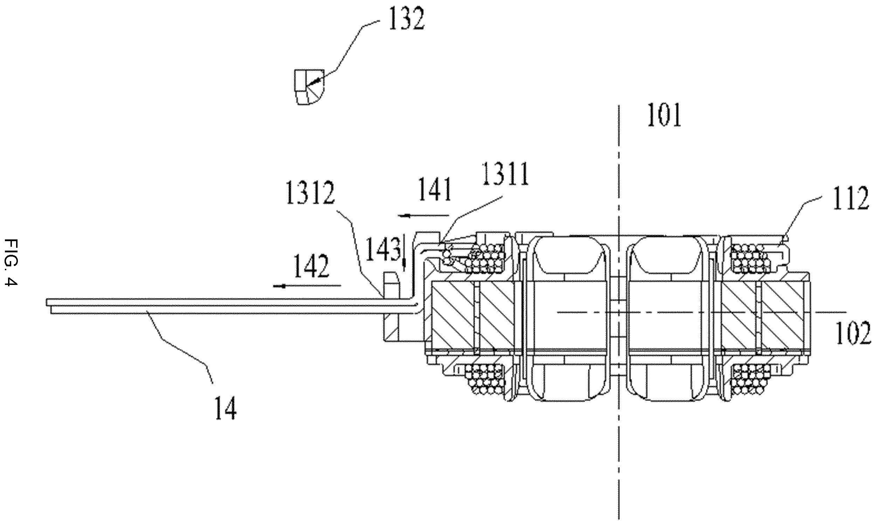

As shown in FIG. 4, with the first direction 101 as a vertical direction, the first openings 1311 and the second openings 1312 are located on different horizontal planes, and the horizontal planes are perpendicular to the first direction 101. Since the first openings 1311 and the second openings 1312 are located on different horizontal planes, the motor lead wires 14 need to be bent in the lead wire channel 1315, thereby changing the direction of the motor lead wires 14. The fixing member 132 is used for being inserted into the lead wire channel 1315 and mating with the lead-out portion 1310 to abut against the motor lead wires 14 to change the direction of the motor lead wires 14. The fixing member 132 abuts against the motor lead wires 14 so that the position of the motor lead wires 14 can be fixed to prevent the motor lead wires 14 from wobbling.

In some examples, a direction in which the motor lead wires 14 enter the first openings 1311 is a first lead-out direction 141, and a direction in which the motor lead wires 14 leave the second openings 1312 is a second lead-out direction 142. The first lead-out direction 141 is parallel to the second lead-out direction 142. In other examples, a first included angle may be formed between the first lead-out direction 141 and the second lead-out direction 142. Specifically, the first included angle may be an acute angle.

In some examples, a direction in which the motor lead wires 14 leave the first openings 1311 is a third lead-out direction 143. The third lead-out direction 143 is perpendicular to the first lead-out direction 141, or the third lead-out direction 143 is perpendicular to the second lead-out direction 142. In other examples, a second included angle may be formed between the third lead-out direction 143 and the first lead-out direction 141 or the second lead-out direction 142. Specifically, the second included angle may be an acute angle (not shown in the figure).

In this example, the motor lead wires 14 change from the first lead-out direction 141 to the third lead-out direction 143 for the first time and change from the third lead-out direction 143 to the second lead-out direction 142 for the second time. In this manner, in this example, the end cover assembly 13 changes the lead-out direction of the motor lead wires 14 twice.

In other examples, the end cover assembly 13 may change the lead-out direction of the motor lead wires 14 three times. The fixing member 132 may include a continuously bent Z-shaped structure (not shown in the figure), thereby abutting against the motor lead wires 14 to change from the second lead-out direction 142 to a fourth lead-out direction (not shown in the figure) so that the motor lead wires 14 change for the third time. The fourth lead-out direction may be parallel to the third lead-out direction 143, or an included angle may be formed between the fourth lead-out direction and the third lead-out direction 143. Of course, the end cover assembly 13 may change the lead-out direction of the motor lead wires 14 four times or more.

In the electric motor 10 of this example, the coil end cover 131 and the fixing member 132 mate with each other so that the motor lead wires 14 can be fixed and led out, and the motor lead wires 14 can be fixed without a terminal assembly. In this manner, the following problem can be avoided: the connection between the motor lead wires 14 and the terminal assembly becomes loose due to loose snap-fitting, loose hooking and tightening, or aging, causing poor electrical contact and damaging the performance of the electric motor and the power tool.

In some examples, the fixing member 132 is snap-fit with the coil end cover 131. In some specific examples, the fixing member 132 is snap-fit with the coil end cover 131 in the first direction 101, and the fixing member 132 and the coil end cover 131 engage with each other in a complementary manner to achieve fixation in the first direction 101. A first clamping portion 1321 and a second clamping portion 1322 are provided at two opposite ends of the fixing member 132, respectively.

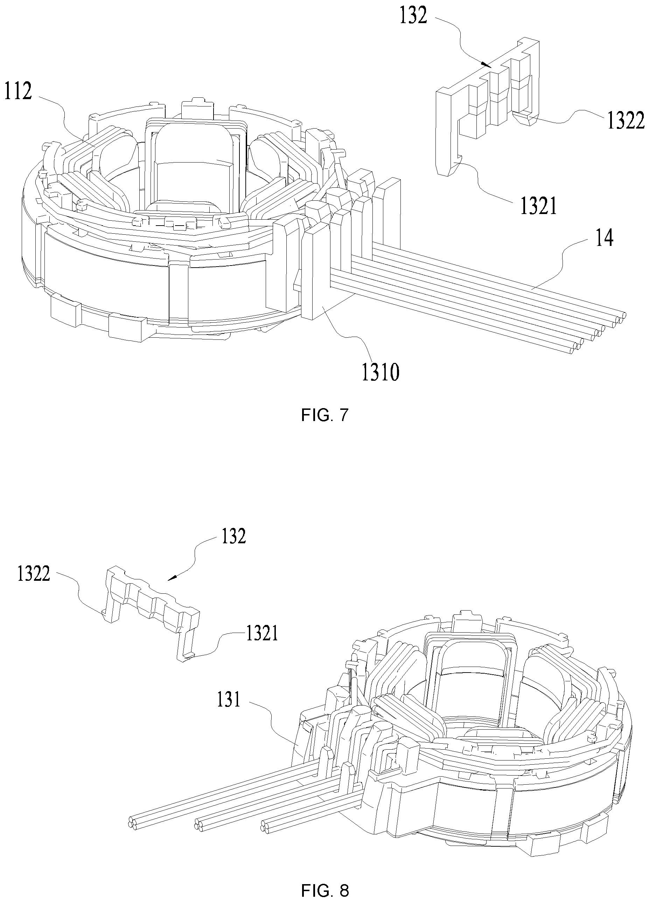

As shown in FIGS. 7 and 8, the first clamping portion 1321 and the second clamping portion 1322 may be configured to be hook-shaped so that the first clamping portion 1321 and the second clamping portion 1322 can hook the coil end cover 131 more easily. Specifically, the fixing member 132 may be a structure shown in FIG. 7, where the first clamping portion 1321 extends in a direction toward the second clamping portion 1322, and the second clamping portion 1322 extends in a direction toward the first clamping portion 1321. The fixing member 132 may be a structure shown in FIG. 8, where the first clamping portion 1321 extends in a direction away from the second clamping portion 1322, and the second clamping portion 1322 extends in a direction away from the first clamping portion 1321.

In other examples, the fixing member 132 may be snap-fit with the coil end cover 131 in the radial direction of the electric motor, that is, in a second direction 102 (not shown in the figure), thereby achieving fixation in the radial direction of the electric motor.

In some examples, to avoid wobbling, the motor lead wires 14 are bonded to the coil end cover 131. Specifically, glue may be applied inside the lead wire channel 1315 to fix the motor lead wires 14. In this manner, the glue for mating with the coil end cover 131 to fix the coil lead wires 14 is considered as the fixing member 132. Of course, glue may be provided between the fixing member 132 and the coil end cover 131 to further fix the motor lead wires 14.

In this example, the coil end cover 131 is a first part, the fixing member 132 is a second part that is not integrally formed with the coil end cover, and the motor lead wires 14 are pressed and held between the fixing member 132 and the coil end cover 131, thereby fixing the motor lead wires 14. When glue is used as the fixing member, the glue may be considered to be non-integrally formed with the coil end cover.

The motor lead wires 14 are clamped and fixed between the fixing member 132 and the coil end cover 131, and the structure is simple and easy to manufacture.

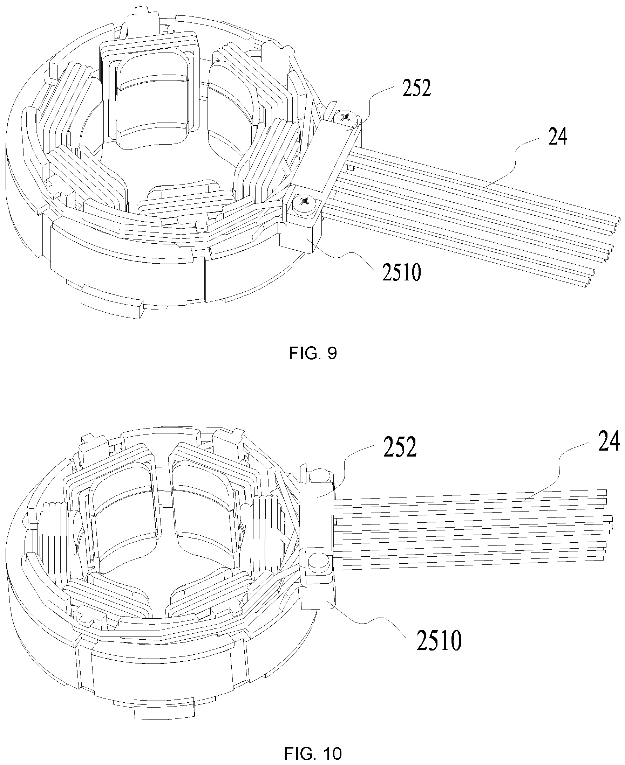

As shown in FIGS. 9 to 14, the present application further provides an electric motor. For ease of description, in this example, merely the differences between this example and the preceding example are described, and the same reference numeral is used for a component which is the same as or similar to that in the preceding example. The portions of the preceding example that are compatible with this example may be applied to this example, and merely the differences between this example and the preceding example are described below.

In this example, an electric motor 20 includes an end cover assembly 25 that does not change the lead-out direction of motor lead wires 24. The end cover assembly 25 includes a coil end cover 251 and a fixing member 252. The coil end cover 251 includes a lead-out portion 2510 for leading out the motor lead wires 24. The fixing member 252 and the lead-out portion 2510 mate with each other to compress the motor lead wires 24.

As shown in FIG. 9, in some examples, the fixing member 22252 and the lead-out portion 2510 are fixed by bolts or screws.

As shown in FIG. 10, in some examples, the fixing member 252 and the lead-out portion 2510 are fixed through heat fusion. The fixing member 252 is provided with through holes, and the lead-out portion 2510 is provided with protrusions capable of passing through the through holes. After the coil end cover 251 and the fixing member 252 are assembled, heat is used to melt the protrusions on the lead-out portion 2510 that protrude from the through holes to fix the fixing member 252 and the lead-out portion 2510.

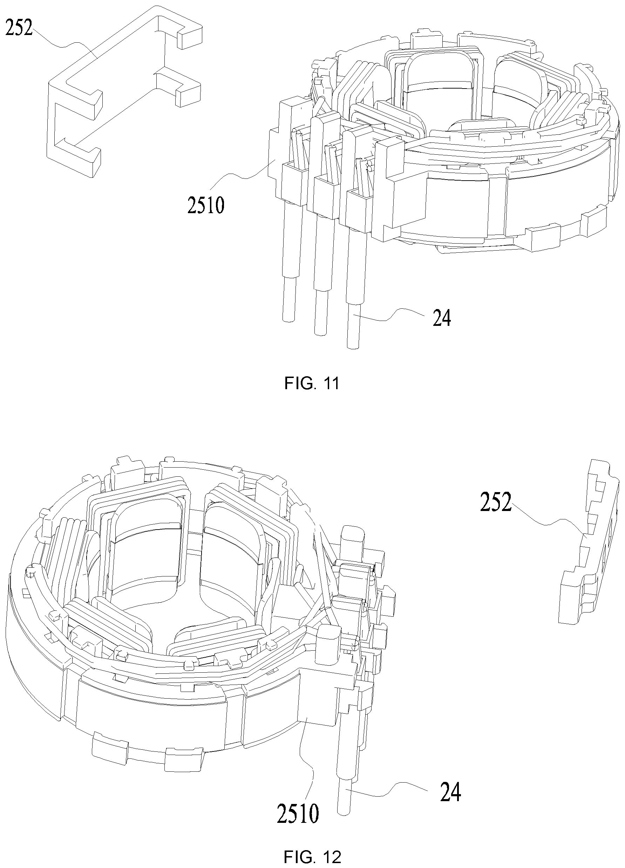

As shown in FIGS. 11 and 12, in some examples, the fixing member 252 and the lead-out portion 2510 may be fixed by snaps.

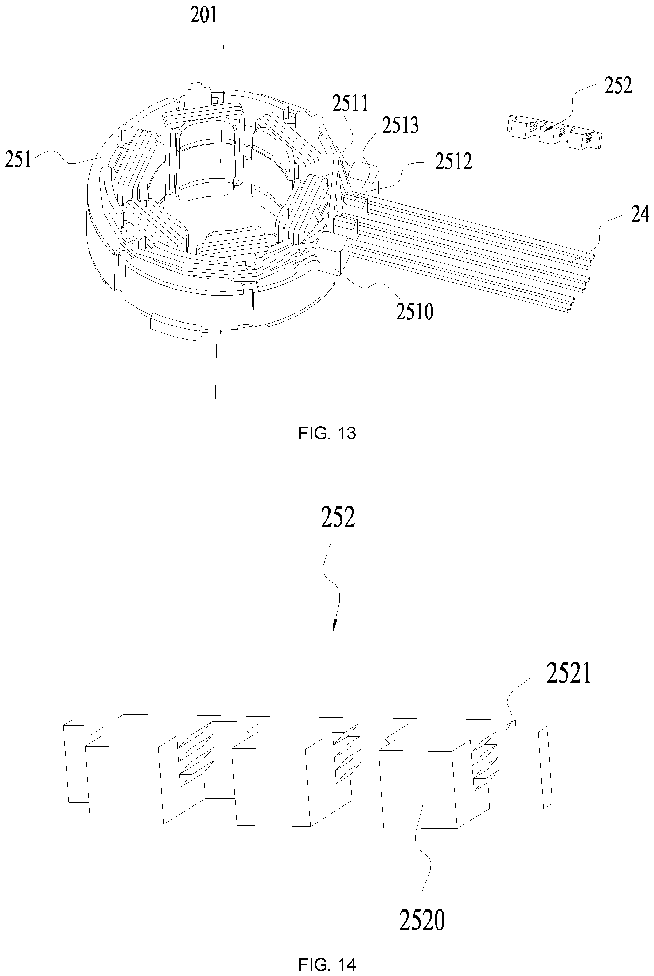

As shown in FIGS. 13 and 14, in some examples, the lead-out portion 2510 includes first openings 2511 and second openings 2512, and the first openings 2511 and/or the second openings 2512 are configured to be semi-enclosed structures. The semi-enclosed structures are in contrast to the fully-enclosed structures. The semi-enclosed structures include notches, and the fixing member 252 can be inserted into the lead-out portion 2510 through the notches. With a first direction 201 as a vertical direction, the first openings 2511 and the second openings 2512 are located on the same horizontal plane.

The lead-out portion 2510 is provided with first protrusions 2513, and the first opening 2511 and the second opening 2512 are formed between two first protrusions 2513. The fixing member 252 includes insertion portions 2520 for being inserted into the first openings 2511 and the second openings 2512. The insertion portion 2520 includes second protrusions 2521. The second protrusions 2521 abut against the first protrusions 2513 so that the insertion portions 2520 abut against the motor lead wires 24.

In some examples, with the first direction 201 as the vertical direction, the insertion portion 2520 includes at least two second protrusions 2521 located on different horizontal planes so that the insertion portions 2520 are capable of abutting against the motor lead wires 24 with different diameters.

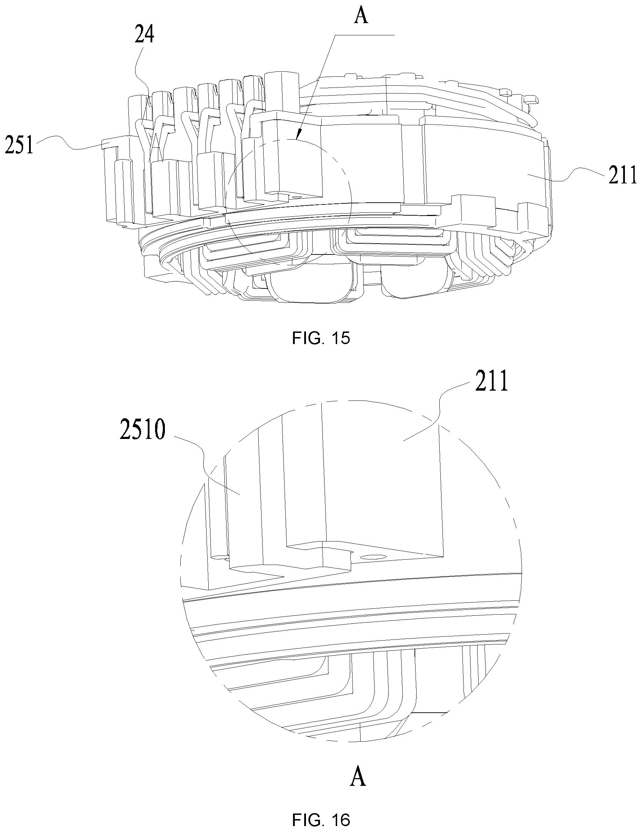

As shown in FIGS. 15 and 16, in some examples, to enhance the stability of the connection between the coil end cover 251 and the stator core 211 when the electric motor 20 rotates, the coil end cover 251 and the stator core 211 may be configured to be capable of abutting against each other when the electric motor 20 rotates.

In this example, the method for fixing the fixing member 252 to the coil end cover 251 may be applied to the end cover assembly 13 in the preceding example of the present application, and the specific fixing structure of the fixing member 132 and the coil end cover 131 is not repeated here.

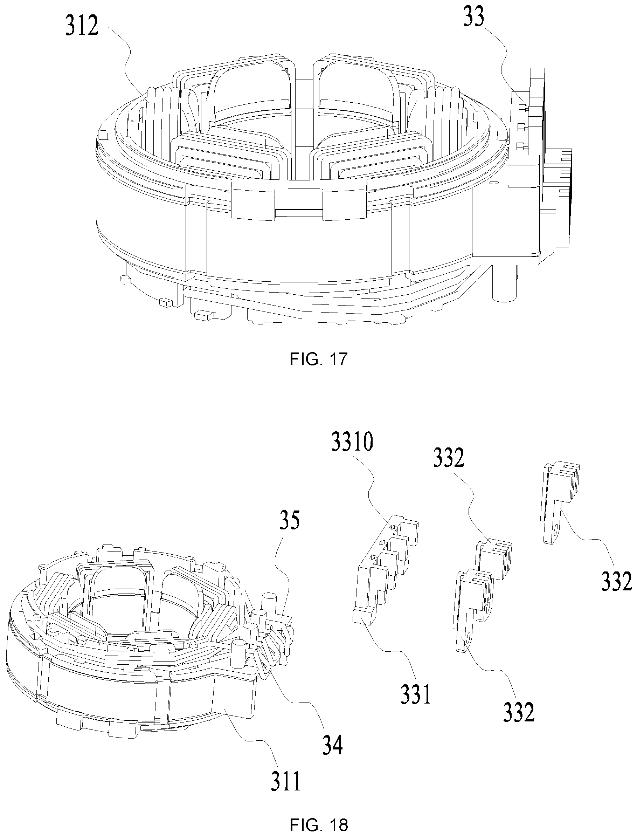

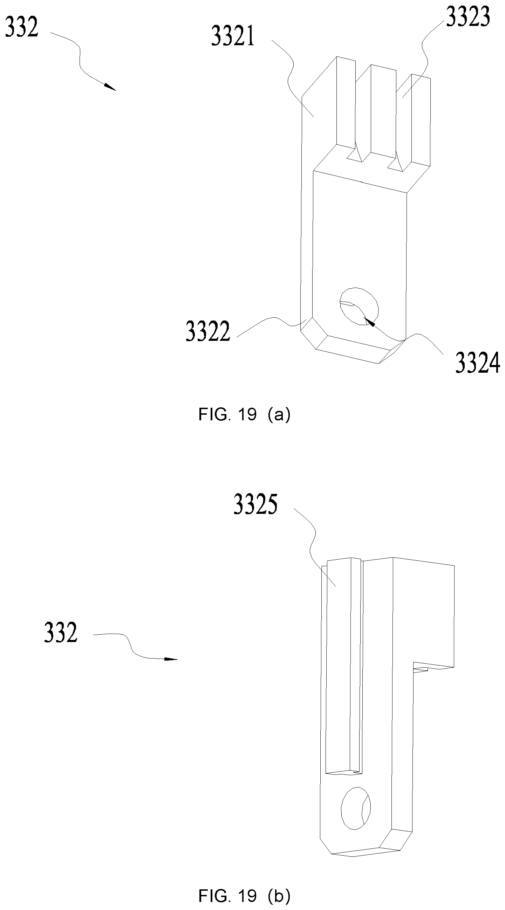

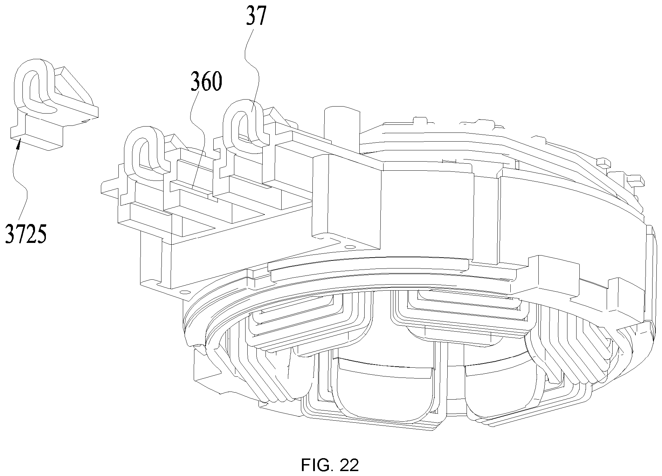

As shown in FIGS. 17 to 23, the present application further provides an electric motor 30. For ease of description, in this example, merely the differences between this example and the preceding examples are described, and the same reference numeral is used for a component which is the same as or similar to that in the preceding examples. The portions of the preceding examples that are compatible with this example may be applied to this example, and merely the differences between this example and the preceding examples are described below.

In this example, an electric motor 30 mainly includes a stator assembly 31, a rotor assembly, a terminal assembly 33, motor lead wires 34, and an end cover 35.

The stator assembly 31 includes a stator core 311 and winding coils 312. The rotor assembly includes a rotor shaft. The end cover 35 is at least partially embedded into the gap between adjacent connecting arms of the stator assembly 31 to achieve fixation. The end cover 35 is disposed above an end of the winding coils 312 and can fix the wire ends of multiple motor lead wires 34 left after the winding coils 312 are wound, thereby preventing the winding coils 312 from being disordered.

The motor lead wires 34 of the electric motor 30 are electrically connected to the power supply through the terminal assembly 33 instead of being directly electrically connected. Specifically, the motor lead wires 34 are electrically connected to the terminal assembly 33, and the terminal assembly 33 is electrically connected to the power supply.

As shown in FIGS. 17 to 19, in some examples, the terminal assembly 33 includes an insertion member 331 and wire hooking racks 332. The insertion member 331 can be embedded into the end cover 35 or the stator core 311, and the insertion member 331 includes insertion slots 3310 into which the wire hooking racks 332 can be embedded. The insertion member 331 may be made of bakelite powder by injection molding. The wire hooking rack 332 includes a first wire hooking end 3321 and a second wire hooking end 3322. The first wire hooking end 3321 is formed with wire hooking portions 3323, and the wire hooking portion 3323 is in the shape of a notch groove and can hook the motor lead wire 34, thereby fixing the motor lead wire 34 to the wire hooking portion 3323. The second wire hooking end 3322 of the wire hooking rack 332 is formed with a connecting portion 3324 for connecting the power supply, and the power supply can supply electrical energy to the winding coils 312. As an example, the connecting portion 3324 is configured to be a circular through hole, thereby facilitating the welding of the power line to the wire hooking rack 332. The wire hooking rack 332 is further provided with a limiting protrusion 3325 connected to the insertion slot 3310. The limiting protrusion 3325 can be embedded into the insertion slot 3310, thereby facilitating the positioning and embedding between the wire hooking rack 332 and the insertion member 331.

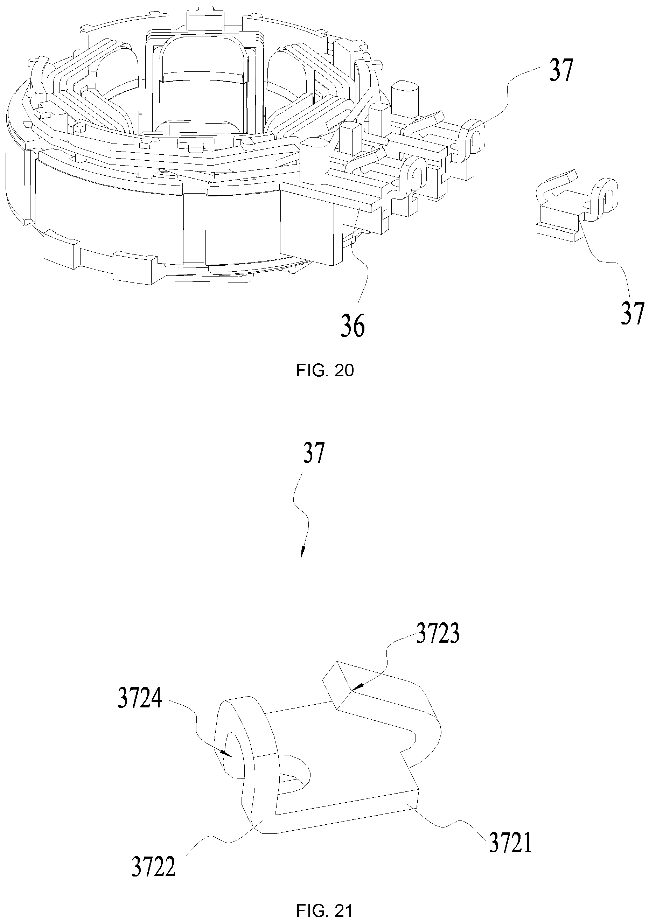

As shown in FIGS. 20 to 22, the present application further provides an example in which the electric motor 30 includes an end cover 36 and terminals 37. For ease of description, in this example, merely the differences between this example and the preceding examples are described, and the same reference numeral is used for a component which is the same as or similar to that in the preceding examples. The portions of the preceding examples that are compatible with this example may be applied to this example, and merely the differences between this example and the preceding examples are described below.

In this example, the motor lead wires 34 of the electric motor 30 are electrically connected to the power supply through the terminals 37 instead of being directly electrically connected. Specifically, the motor lead wires 34 are electrically connected to the terminals 37, and the terminals 37 are electrically connected to the power supply.

The end cover 36 and the terminals 37 are connected through insertion. The terminals 37 can be inserted into the end cover 36 and fixed in the end cover 36. The end cover 36 includes slots 360 into which the terminals 37 can be inserted. The terminal 37 includes a first wire hooking end 3721 and a second wire hooking end 3722. The first wire hooking end 3721 is formed with a wire hooking portion 3723, and the wire hooking portion 3723 is in the shape of a hook and can easily hook the motor lead wire 34, thereby fixing the motor lead wire 34 to the wire hooking portion 3723. The second wire hooking end 3722 of the terminal 37 is formed with a connecting portion 3724 for connecting the power supply, and the power supply can supply electrical energy to the winding coils 312. As an example, the connecting portion 3724 is configured to be a circular through hole, thereby facilitating the welding of the power line to the terminal 37. The terminal 37 is further provided with an insertion portion 3725 that can be inserted into the slot 360, thereby facilitating the positioning and insertion between the end cover 36 and the terminal 37.

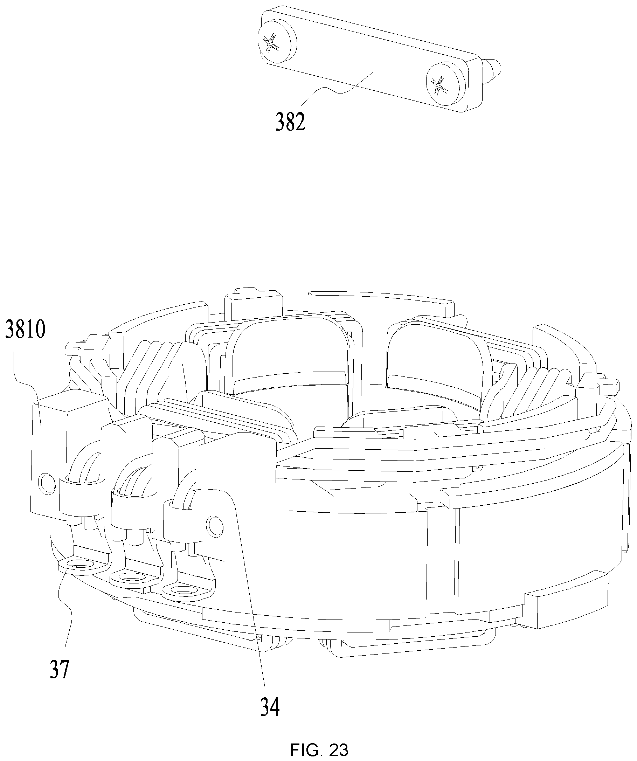

As shown in FIG. 23, the present application further provides an example in which the electric motor 30 includes an end cover assembly 38 and terminals 37. For ease of description, in this example, merely the differences between this example and the preceding examples are described, and the same reference numeral is used for a component which is the same as or similar to that in the preceding examples. The portions of the preceding examples that are compatible with this example may be applied to this example, and merely the differences between this example and the preceding examples are described below.

The end cover assembly 38 includes a coil end cover 381 and a fixing member 382. The coil end cover 381 includes a lead-out portion 3810 for leading out the motor lead wires 14. The fixing member 382 and the lead-out portion 3810 mate with each other to compress the motor lead wires 14. In some examples, as shown in FIG. 23, the fixing member 382 and the lead-out portion 3810 are fixed by bolts or screws. In other examples, the fixing member 382 and the lead-out portion 3810 are fixed through heat fusion or snap-fitting.

The power tool 100 in the example shown in FIG. 1 is specifically an angle grinder. It is to be understood that the power tool 100 may be another handheld power tool, for example, a hedge trimmer or a sander. Alternatively, the power tool may be a table tool, for example, a table saw or a miter saw. Alternatively, the power tool may be a push power tool, for example, a push mower or a push snow thrower. Alternatively, the power tool may be a riding power tool, for example, a riding mower, a riding vehicle, or an allterrain vehicle. Alternatively, the power tool may be a robotic tool, for example, a robotic mower or a robotic snow thrower.

In some examples, the power tool may be a power tool, and the power tool may be an electric drill, an electric lamp, or an electric vehicle. Alternatively, the power tool may be an engine power tool, for example, an engine string trimmer or an engine mower.

In some examples, the power tool may be a garden tool, for example, a hedge trimmer, a blower, a mower, or a chainsaw. Alternatively, the power tool may be a decorating tool, for example, a screwdriver, a nail gun, a circular saw, or a sander.

In some examples, the power tool may be a vegetation care tool, for example, a string trimmer, a mower, a hedge trimmer, or a chainsaw. Alternatively, the power tool may be a cleaning tool, for example, a blower, a snow thrower, or a cleaning machine. Alternatively, the power tool may be a drilling tool, for example, a drill, a screwdriver, a wrench, or an electric hammer. Alternatively, the power tool may be a sawing tool, for example, a reciprocating saw, a jigsaw, or a circular saw. Alternatively, the power tool may be a table tool, for example, a table saw, a miter saw, a metal cutter, or an electric router. Alternatively, the power tool may be a sanding tool, for example, an angle grinder or a sander. Alternatively, the power tool may be another power tool, for example, a lamp or a fan.

It is to be understood that any power device with an electric motor may adopt the technical solution disclosed in this example. Any power tool adopting the technical solution disclosed in this example falls within the scope of the present application. For example, the power tool may be a power head. The power head includes an electric motor and is configured to be adapted to some output assemblies to implement the function of the tool.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A power tool, comprising a working assembly and an electric motor, wherein the electric motor is used for driving the working assembly to work;
wherein the electric motor comprises:
a rotor assembly comprising a rotor shaft connected to the working assembly;
a stator assembly comprising a stator core and a plurality of winding coils wound onto the stator core; and
an end cover assembly for fixing the plurality of winding coils and leading out a plurality of motor lead wires;
wherein the end cover assembly comprises:
a coil end cover at least partially embedded into the stator assembly; and
a fixing member configured to mate with the coil end cover to fix the plurality of motor lead wires;
wherein the end cover assembly is capable of changing a lead-out direction of the plurality of motor lead wires at least twice.

2. The power tool of claim 1, wherein the coil end cover comprises a lead-out portion for leading out the plurality of motor lead wires, the lead-out portion comprises a first end facing the plurality of winding coils and a second end facing away from the plurality of winding coils, and the lead-out portion further comprises:
a first opening provided at the first end, wherein the plurality of motor lead wires enter the lead-out portion through the first openings; and
a second opening provided at the second end, wherein the plurality of motor lead wires leave the lead-out portion through the second opening.

3. The power tool of claim 2, wherein with an extension direction of the rotor shaft as a vertical direction, the first opening and the second opening are located on different horizontal planes.

4. The power tool of claim 2, wherein a direction in which the plurality of motor lead wires enter the first opening is a first lead-out direction, a direction in which the plurality of motor lead wires leave the second opening is a second lead-out direction, and the first lead-out direction is basically parallel to the second lead-out direction.

5. The power tool of claim 2, wherein a direction in which the plurality of motor lead wires enter the first opening is a first lead-out direction, a direction in which the plurality of motor lead wires leave the second opening is a second lead-out direction, and an included angle is formed between the first lead-out direction and the second lead-out direction.

6. The power tool of claim 4 or 5, wherein a direction in which the plurality of motor lead wires leave the first opening is a third lead-out direction, and the third lead-out direction is perpendicular to the first lead-out direction or the second lead-out direction.

7. The power tool of claim 1, wherein the fixing member further comprises a first clamping portion and a second clamping portion that are snap-fit with the coil end cover.

8. The power tool of claim 7, wherein the first clamping portion extends in a direction away from the second clamping portion, and the second clamping portion extends in a direction away from the first clamping portion.

9. The power tool of claim 7, wherein the first clamping portion extends in a direction toward the second clamping portion, and the second clamping portion extends in a direction toward the first clamping portion.

10. The power tool of claim 1, wherein the plurality of motor lead wires are bonded to the coil end cover.

11. The power tool of claim 2, wherein the fixing member further comprises insertion portions for being inserted into the first opening and the second opening.

12. The power tool of claim 11, wherein the lead-out portion further comprises first protrusions, and the first opening and the second opening are formed between two of the first protrusions.

13. The power tool of claim 12, wherein an insertion portion of the insertion portions comprises second protrusions, and the second protrusions are configured to be capable of abutting against the first protrusions so that the insertion portions abut against the plurality of motor lead wires.

14. The power tool of claim 13, wherein with an extension direction of the rotor shaft as a vertical direction, the insertion portion comprises at least two second protrusions located on different horizontal planes so that the insertion portions are capable of abutting against the plurality of motor lead wires with different diameters.

15. The power tool of claim 1, wherein the stator core is configured to be capable of abutting against the coil end cover when the electric motor rotates.

16. An electric motor, comprising:
a rotor assembly comprising a rotor shaft;
a stator assembly comprising a stator core and a plurality of winding coils wound onto the stator core; and
an end cover assembly for fixing the plurality of winding coils and leading out a plurality of motor lead wires;
wherein the end cover assembly comprises:
a coil end cover at least partially embedded into the stator assembly; and
a fixing member configured to mate with the coil end cover to fix the plurality of motor lead wires;
wherein the end cover assembly is capable of changing a lead-out direction of the plurality of motor lead wires at least twice.

17. The electric motor of claim 16, wherein the coil end cover comprises a lead-out portion for leading out the plurality of motor lead wires, the lead-out portion comprises a first end facing the plurality of winding coils and a second end facing away from the plurality of winding coils, and the lead-out portion further comprises a first opening provided at the first end, wherein the plurality of motor lead wires enter the lead-out portion through the first opening, and
a second opening provided at the second end, wherein the plurality of motor lead wires leave the lead-out portion through the second opening.

18. The electric motor of claim 17, wherein with an extension direction of the rotor shaft as a vertical direction, the first opening and the second opening are located on different horizontal planes.
